# EUROPEAN PATENT SPECIFICATION

(11) **EP 4 647 916 B1**
(45) Date of publication and mention of the grant of the patent: **04.11.2026**
(21) Application number: 24901757.5
(22) Date of filing: 04.06.2024
(51) Int. Cl.: G06F 12/02

(54) **RESOURCE ALLOCATION METHOD AND APPARATUS, ELECTRONIC DEVICE AND COMPUTER READABLE STORAGE MEDIUM**
RESSOURCENZUWEISUNGSVERFAHREN UND -VORRICHTUNG, ELEKTRONISCHE VORRICHTUNG UND COMPUTERLESBARES SPEICHERMEDIUM
PROCÉDÉ ET APPAREIL D'ATTRIBUTION DE RESSOURCES, DISPOSITIF ÉLECTRONIQUE ET SUPPORT DE STOCKAGE LISIBLE PAR ORDINATEUR

(30) Priority: 12.03.2024 CN 202410284379
(43) Date of publication of application: 12.11.2025
(73) Proprietor: Hygon Information Technology Co., Ltd., Tianjin 300392 (CN)
(72) Inventor: YIN, Guotao, Tianjin 300392 (CN); JIN, Weisong, Tianjin 300392 (CN)
(74) Representative: Regimbeau
(86) International application number: PCT/CN2024/097266
(87) International publication number: WO 2025/189575

(56) References cited:
- CN-A- 1 429 361
- CN-A- 108 845 884
- CN-A- 111 813 543
- CN-A- 112 286 687
- CN-A- 118 113 474
- US-A1- 2023 297 426
- US-B1- 7 412 492
- YANG HUA, CUI GANG, LIU HONG-WEI, YANG XIAO-ZONG: "Regulating SMT Resource Allocation via Thread-Sensitive Register Renaming", CHINESE JOURNAL OF COMPUTERS, VOL. 31, NO. 5, SCHOOL OF COMPUTER,SHENYANG INSTITUTE OF AERONAUTICAL ENGINEERING,SHENYANG 110136)2)(SCHOOL OF COMPUTER SCIENCE AND TECHNOLOGY,HARBIN INSTITUTE OF TECHNOLOGY,HARBIN 150001, 31 May 2008 (2008-05-31), School of Computer,Shenyang Institute of Aeronautical Engineering,Shenyang 110136)2)(School of Computer Science and Technology,Harbin Institute of Technology,Harbin 150001, pages 1 - 13, XP093357123, Retrieved from the Internet <URL:https://www.cnki.net/KCMS/detail/detail.aspx?dbcode=CJFD&dbname=CJFD2008&filename=JSJX200805015&uniplatform=OVERSEA&v=gJ82quNazerOH9_n7ILtr_C7mJy6VCZUwAbTEWUu4hso6mKBpWkjKnUXlihvHUQJ>

## Description

The present application claims priority to Chinese patent application No. 202410284379.7 filed on March 12, 2024.

### TECHNICAL FIELD

Embodiments of the present disclosure relate to a resource allocation method and apparatus, an electronic device, and a computer-readable storage medium.

### BACKGROUND

Simultaneous Multi-Threading (SMT) is an important technology for improving the overall performance of a central processing unit (CPU). It allows for simultaneous execution of instructions of a plurality of threads by using mechanisms such as multiple issue and out-of-order execution of a high-performance CPU core. Thus, one physical CPU core presents a plurality of virtual CPU cores for software or an operating system. When a modern multiple issue high-performance CPU core executes a single thread, a plurality of execution units and hardware resources therein cannot be fully utilized in the vast majority of the time. When the thread is halted for some reasons (e.g., L2 cache miss), the hardware execution units can only be idled. These may lead to the waste of the hardware resources and the reduction of the performance-to-power ratio. In the SMT mode, when a thread is halted, other threads still can run. Thus, the utilization ratio of the hardware resources is increased, thereby increasing the multi-thread throughput, the overall performance, and the performance-to-power ratio of the CPU core. Since a thread will share the CPU core resources with other threads, the performance of the thread running in the SMT mode is often lower than that in the single thread mode. US2023/297426 teaches allocating, deallocating, and reallocating resources between thread groups during execution via a free pool, depending on runtime needs, in order to improve resource utilisation.

### SUMMARY

At least one embodiment of the present disclosure provides a resource allocation method, including: obtaining configuration information corresponding to each of a plurality of types of hardware resources; determining a proportion of a first part of resources and a proportion of a second part of resources in each type of hardware resources according to the configuration information corresponding to each type of hardware resources; allocating the first part of resources of each type of hardware resources to a plurality of threads according to a predetermined allocation ratio; and allocating the second part of resources of each type of hardware resources to at least part of the plurality of threads according to running conditions of the plurality of threads.

For example, in the resource allocation method provided in at least one of the above embodiments of the present disclosure, the proportion of the first part of resources and the proportion of the second part of resources are values greater than or equal to 0 and less than or equal to 1, and a sum of the proportion of the first part of resources and the proportion of the second part of resources is equal to 1.

For example, in the resource allocation method provided in at least one of the above embodiments of the present disclosure, the allocating the second part of resources of each type of hardware resources to at least part of the plurality of threads according to running conditions of the plurality of threads includes: reallocating, at intervals of a predetermined duration, the second part of resources of each type of hardware resources among the plurality of threads according to the running conditions of the plurality of threads in the predetermined duration.

For example, in the resource allocation method provided in at least one of the above embodiments of the present disclosure, the plurality of types of hardware resources include a first type of hardware resources; and the reallocating, at intervals of the predetermined duration, the second part of resources of each type of hardware resources among the plurality of threads according to the running conditions of the plurality of threads in the predetermined duration includes: determining, at intervals of the predetermined duration, respective quantities demanded by the plurality of threads for the first type of hardware resources according to the running conditions of the plurality of threads in the predetermined duration; and reallocating the second part of resources of the first type of hardware resources among the plurality of threads according to the respective quantities demanded by the plurality of threads for the first type of hardware resources.

For example, in the resource allocation method provided in at least one of the above embodiments of the present disclosure, the determining, at intervals of the predetermined duration, respective quantities demanded by the plurality of threads for the first type of hardware resources according to the running conditions of the plurality of threads includes: counting, at intervals of the predetermined duration, respective counts of the plurality of threads triggering a stall event; and determining the respective quantities demanded by the plurality of threads for the first type of hardware resources according to the counts.

For example, in the resource allocation method provided in at least one of the above embodiments of the present disclosure, the reallocating the second part of resources of the first type of hardware resources among the plurality of threads according to the respective quantities demanded by the plurality of threads for the first type of hardware resources includes: determining a total quantity demanded by the plurality of threads for the first type of hardware resources according to the respective quantities demanded by the plurality of threads for the first type of hardware resources; and determining, from the second part of resources of the first type of hardware resources, a quantity of resources allocated to each thread according to the total quantity demanded and the respective quantities demanded by the plurality of threads for the first type of hardware resources.

At least one embodiment of the present disclosure provides a resource allocation apparatus, including an obtaining unit, a determination unit, a first allocation unit and a second allocation unit. The obtaining unit is configured to obtain configuration information corresponding to each of a plurality of types of hardware resources. The determination unit is configured to determine a proportion of a first part of resources and a proportion of a second part of resources in each type of hardware resources according to the configuration information corresponding to each hardware resource. The first allocation unit is configured to allocate the first part of resources of each type of hardware resources to a plurality of threads according to a predetermined allocation ratio. The second allocation unit is configured to allocate the second part of resources of each type of hardware resources to at least part of the plurality of threads according to running conditions of the plurality of threads.

For example, in the resource allocation apparatus provided in at least one of the above embodiments of the present disclosure, the proportion of the first part of resources and the proportion of the second part of resources are values greater than or equal to 0 and less than or equal to 1, and a sum of the proportion of the first part of resources and the proportion of the second part of resources is equal to 1.

For example, in the resource allocation apparatus provided in at least one of the above embodiments of the present disclosure, the second allocation unit is further configured to: reallocate, at intervals of a predetermined duration, the second part of resources of each type of hardware resources among the plurality of threads according to the running conditions of the plurality of threads in the predetermined duration.

For example, in the resource allocation apparatus provided in at least one of the above embodiments of the present disclosure, the plurality of types of hardware resources include a first type of hardware resources; and the second allocation unit is further configured to: determine, at intervals of the predetermined duration, respective quantities demanded by the plurality of threads for the first type of hardware resources according to the running conditions of the plurality of threads in the predetermined duration; and reallocate the second part of resources of the first type of hardware resources among the plurality of threads according to the respective quantities demanded by the plurality of threads for the first type of hardware resources.

For example, in the resource allocation apparatus provided in at least one of the above embodiments of the present disclosure, the second allocation unit is further configured to: count, at intervals of the predetermined duration, respective counts of the plurality of threads triggering a stall event; and determine the respective quantities demanded by the plurality of threads for the first type of hardware resources according to the counts.

For example, in the resource allocation apparatus provided in at least one of the above embodiments of the present disclosure, the second allocation unit is further configured to: determine a total quantity demanded by the plurality of threads for the first type of hardware resources according to the respective quantities demanded by the plurality of threads for the first type of hardware resources; and determine, from the second part of resources of the first type of hardware resources, a quantity of resources allocated to each thread according to the total quantity demanded and the respective quantities demanded by the plurality of threads for the first type of hardware resources.

At least one embodiment of the present disclosure provides an electronic device, including: a processor; and a memory storing one or more computer program modules; where the one or more computer program modules are configured to be executed by the processor to implement the resource allocation method provided by any embodiment of the present disclosure.

At least one embodiment of the present disclosure provides a computer-readable storage medium, storing non-transitory computer-readable instructions which, when executed by a computer, implement the resource allocation method provided by any embodiment of the present disclosure.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description relate to merely some embodiments of the present disclosure and are not intended to limit the present disclosure.
Fig. 1 illustrates a schematic diagram of a pipeline of a simultaneous multi-threading CPU architecture;
Fig. 2 illustrates a flowchart of a resource allocation method provided by at least one embodiment of the present disclosure;
Fig. 3 illustrates a schematic diagram of a static allocation provided by at least one embodiment of the present disclosure;
Fig. 4 is a schematic diagram of another static allocation provided by at least one embodiment of the present disclosure;
Fig. 5 illustrates a schematic diagram of resource allocations before and after dynamic adjustment provided by at least one embodiment of the present disclosure;
Fig. 6 illustrates a schematic block diagram of a resource allocation apparatus provided by at least one embodiment of the present disclosure;
Fig. 7 illustrates a schematic block diagram of an electronic device provided by at least one embodiment of the present disclosure;
Fig. 8 illustrates a schematic block diagram of another electronic device provided by at least one embodiment of the present disclosure; and
Fig. 9 illustrates a schematic diagram of a computer-readable storage medium provided by at least one embodiment of the present disclosure.

### DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present application for disclosure, are not intended to indicate any sequence, amount or importance, but distinguish various components. Also, the terms such as "a," "an," "the," etc., are not intended to limit the amount, but indicate the existence of at least one. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "on," "under," "right," "left" and the like are only used to indicate relevant position relationship, and when the position of the object which is described is changed, the relevant position relationship may be changed accordingly.

According to a maximum number of active threads supported, SMT may be referred to as SMT2 (two active threads at most), SMT4 (four active threads at most), and the like. Single thread (ST) may be regarded as a special case of SMT, i.e., SMT with only one active thread.

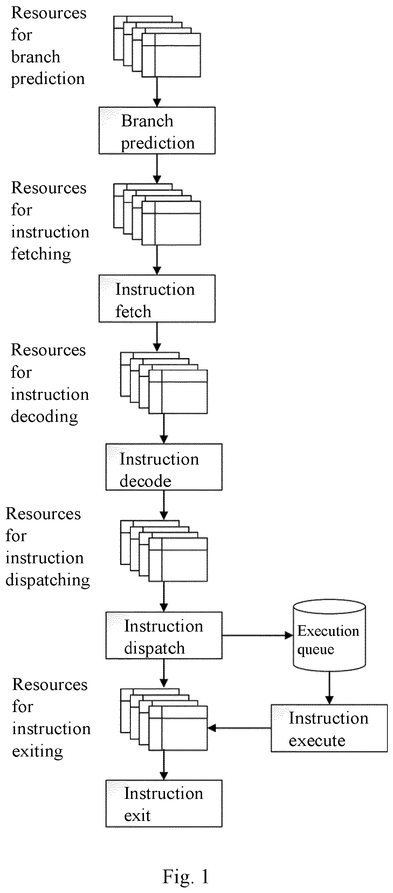

There are generally a plurality of pipeline stages within a CPU core, such as Branch prediction, Instruction fetch, Decode, Dispatch and Rename, Execute, etc. In order to support a high running frequency, each pipeline stage may further include a plurality of pipeline levels. Each pipeline stage requires different static resources. Fig. 1 illustrates a schematic diagram of a pipeline of a simultaneous multi-threading CPU architecture. As shown in Fig. 1, each thread has own hardware resources at different pipeline stages, including, but not limited to, hardware resources listed in Fig. 1. As an example, 4 threads are shown, i.e., SMT4.

An important characteristic of SMT is that instructions in the same instruction execution pipeline level may come from a plurality of threads in the same clock cycle; and at other pipeline stages, usually instructions of one thread are selected and processed in one clock. Therefore, at these stages, one of the plurality of threads needs to be selected for transfer to next pipeline stage. This is called thread scheduling. The selection of the thread scheduling is of great significant for the overall performance and power consumption of SMT and the equity between threads.

The thread scheduling is limited to the influence of a scheduling algorithm, and also to hardware resources each thread possesses. When a certain hardware resource of a certain thread is insufficient, the thread cannot work regardless of the result of the scheduling algorithm. Since the instructions executed by each thread are different, demands for different hardware resources are also inconsistent. Therefore, the allocation of the internal hardware resources of SMT plays a crucial role for thread scheduling.

In some embodiments, the internal hardware resources of SMT may be allocated in an all statically partitioning manner. All types of hardware resources are equally allocated according to the number of threads supported by SMT.

In some embodiments, the internal hardware resources of SMT may be allocated in an all dynamically sharing manner. All types of hardware resources are dynamically shared by all the threads of SMT, which may be realized by a thread scheduling algorithm.

In some embodiments, the internal hardware resources of SMT may be allocated in a mixed mode in which part of types of resources are statically partitioned among a plurality of threads and part of types of resources are dynamically shared among the plurality of threads. For the resources of the same type, it can only be allocated in one manner, e.g., can only be all statically partitioned or all dynamically shared.

In the above three embodiments, for the hardware resources of the same type, it can only be allocated in one manner. If a hardware resource is all dynamically shared, the hardware resource may be more allocated to a thread demanding a large quantity of this hardware resource. Consequently, this hardware resource may not be allocated to some threads demanding a small quantity, resulting in these threads being not responded for a long time. If a hardware resource is all statically partitioned, part of the hardware resource may be allocated to each thread. However, since the instructions executed by each thread are different, the demands for different hardware resources are different and cannot be predicted. Therefore, offline static partitioning of the hardware resource has poor equity. Since a plurality of threads share hardware resources in SMT, compared with a single thread, available resource for each thread are greatly reduced. Therefore, SMT, especially when there are a plurality of threads (e.g., SMT4 or SMT8), is more sensitive to the hardware resources. Thus, if the hardware resources cannot be allocated equitably according to an actual situation, a response time of part of threads may be increased, greatly reducing the SMT performance improvement effect.

At least one embodiment of the present disclosure provides a resource allocation method, a resource allocation apparatus, an electronic device, and a computer-readable storage medium. The resource allocation method includes: obtaining configuration information corresponding to each of a plurality of types of hardware resources; determining a proportion of a first part of resources and a proportion of a second part of resources in each type of hardware resources according to the configuration information corresponding to each hardware resource; allocating the first part of resources of each type of hardware resources to a plurality of threads according to a predetermined allocation ratio; and allocating the second part of resources of each type of hardware resources to at least part of the plurality of threads according to running conditions of the plurality of threads.

In the resource allocation method, for the hardware resources of the same type, proportions of statically allocated resources and dynamically allocated resources are controlled through the configuration information, where the statically allocated part can retain certain basic hardware resources for each thread, avoiding that each thread is not responded for a long time. For a thread having a large demand, the resource quantity allocated may be appropriately increased in a dynamic allocation manner, allowing for more equitable allocation of hardware resources among threads. Moreover, by configuring proportions of statically allocated resources and dynamically allocated resources, a certain hardware resource may be completely switched to be dynamically allocated or statically allocated, which can be flexibly adjusted by the user according to an actual requirement.

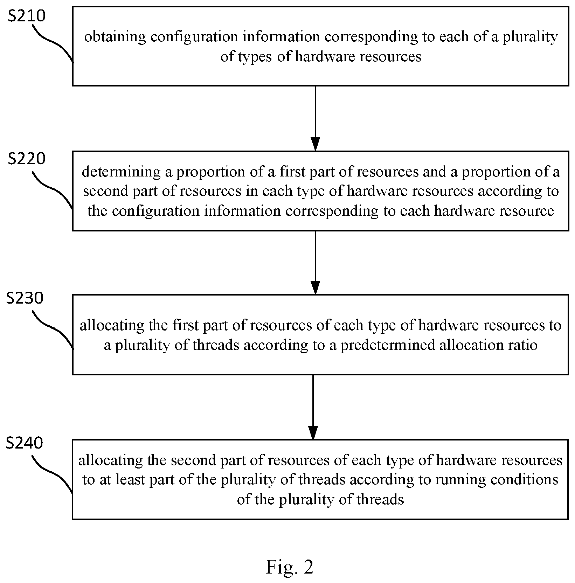

Fig. 2 illustrates a flowchart of a resource allocation method provided by at least one embodiment of the present disclosure.

As shown in Fig. 2, the resource allocation method may include steps S210-S240.

Step S210, obtaining configuration information corresponding to each of a plurality of types of hardware resources.

Step S220, determining a proportion of a first part of resources and a proportion of a second part of resources in each type of hardware resources according to the configuration information corresponding to each hardware resource.

Step S230, allocating the first part of resources of each type of hardware resources to a plurality of threads according to a predetermined allocation ratio.

Step S240, allocating the second part of resources of each type of hardware resources to at least part of the plurality of threads according to running conditions of the plurality of threads.

For example, the plurality of types of hardware resources may include all or part of types of hardware resources at the plurality of pipeline stages in Fig. 1. The resource allocation method of the embodiments of the present disclosure may be adapted to the allocation of different types of hardware resources of different pipelines in Fig. 1. For ease of description, in some embodiments below, the hardware resource of fixed-point registers required at the instruction dispatching stage is taken as an example. Each thread requires the fixed-point registers to store data.

For example, a system register (i.e., Dynamic Resource Partition Register, DRPR) may be set for each type of hardware resources to control a proportion of hardware resources for dynamic allocation. A value (DRPR value) of the system register corresponding to each type of hardware resources may be used as the configuration information of the type of hardware resources. The DRPR value is used for determining proportions of dynamic allocation and static allocation of the corresponding type of hardware resources. The first part of resources may be construed as statically allocatable resources, and this part of resources may be only used by corresponding threads after being allocated to the threads. The second part of resources may be construed as dynamically allocatable resources, and this part of resources are resources shared by a plurality of threads and may be used by different threads at different times.

For example, the proportion of the first part of resources and the proportion of the second part of resources are values greater than or equal to 0 and less than or equal to 1, and a sum of the proportion of the first part of resources and the proportion of the second part of resources is equal to 1.

For example, when the CPU is started, the DRPR value may be manually set by configuring a register, and if not set, is 0 by default. The register may be configured by an operating system or higher-level software. Alternatives to the DRPR value are as shown in Table 1 below:

**Table 1**

| DRPR Value | Dynamically Allocated Resource Proportion | Statically Allocated Resource Proportion |
|---|---|---|
| 0 | 0 | 1 |
| 1 | 1/4 | 3/4 |
| 2 | 2/4 | 2/4 |
| 3 | 3/4 | 1/4 |
| 4 | 1 | 0 |

For example, by setting the DRPR value, one part of resources of the same type may be statically allocated, and the other part may be dynamically allocated. For example, if the DRPR corresponding to fixed-point registers is set to 2, 50% of the fixed-point registers may be statically and equally allocated according to the number of threads, and 50% of the fixed-point registers may be dynamically allocated among threads.

For example, in step S210, the corresponding configuration information may be obtained from the system register corresponding to each type of hardware resources. In step S220, the proportion of the first part of resources and the proportion of the second part of resources may be obtained according to a correspondence between a preset DRPR value and a resource proportion.

For example, if the proportion of dynamic allocation of a certain type of hardware resources is 0 and the proportion of static allocation is 1, the type of hardware resources is all statically partitioned. This type of hardware resources may be, for example, equally partitioned according to the number of threads supported by SMT or allocated unequally according to different proportions.

For example, if the proportion of dynamical allocation of a certain type of hardware resources is 1 and the proportion of static allocation is 0, the type of hardware resources is all dynamically shared. That is, this type of hardware resources is dynamically shared by all the threads.

For example, if the proportion of dynamic allocation of a certain type of hardware resources is between 0 and 1, part of resources of the type of hardware resources are statically allocated, and the other part of resources are dynamically allocated according to quantities demanded by the threads. In an initial state, i.e., before the first dynamic adjustment, resources available for dynamic adjustment may also be equally allocated according to threads and then the resources are dynamically allocated.

For example, the plurality of threads may refer to threads of simultaneous multi-threading. The number of threads of the simultaneous multi-threading may be set according to an actual situation, e.g., SMT2, SMT4, and SMT8. For ease of description, in some embodiments below, the following description is made by taking SMT4 as an example.

For example, in step S230, if the proportion of the first part of resources of a certain type of hardware resources is greater than 0, it indicates that part of the type of hardware resources may be statically allocated among a plurality of threads. For example, in some embodiments, the predetermined allocation ratio may be equal allocation. If the number of threads is 4, the first part of resources may be quartered, and each thread obtain 1/4 of statically allocated resources.

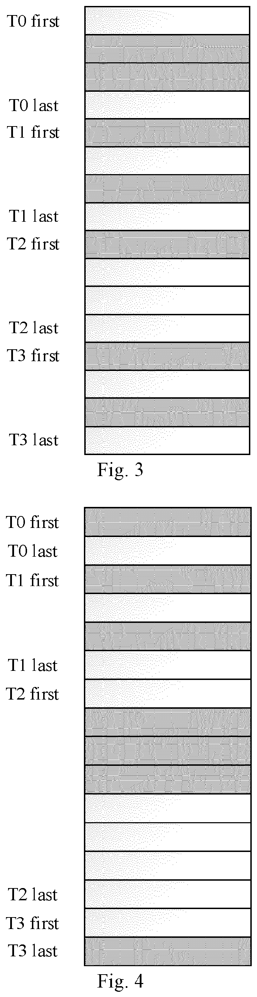

Fig. 3 illustrates a schematic diagram of a static allocation provided by at least one embodiment of the present disclosure. The resource queue shown in Fig. 3 represents, for example, a first part of resources of a certain type of hardware resources. This resource queue may be equally partitioned for active threads in a four-thread mode (SMT4). T0 to T3 represent 4 threads. Each thread has its own first resource and last resource, where the first resource represents a first available entry statically allocated to the thread, and the last resource represents a last available entry statically allocated to the thread. In the ST/SMT mode, the statically allocated resources for each thread are fixed after being set. The gray entry represents that it has been used, and the white entry represents that it is not used.

For example, in some other embodiments, by externally setting a register, static resources may be allocated unequally among a plurality of threads, and a certain thread may be allocated more hardware resources.

Fig. 4 is a schematic diagram of another static allocation provided by at least one embodiment of the present disclosure. The resource queue shown in Fig. 4 represents, for example, a first part of resources of a certain type of hardware resources. T0 to T3 represent 4 threads. An allocation ratio may be set according to a quantity demanded by each thread for this type of hardware resources. For example, for T0 to T3, the allocation ratio may be 1:2:4:1. If the first part of resources include 16 available entries, 2 available entries are allocated to each of the threads T0 and T3, 4 available entries are allocated to the thread T1, and 8 available entries are allocated to the thread T2.

For example, in step S240, if the proportion of the second part of resources of a certain type of hardware resources is greater than 0, it indicates that part of resources of the type of hardware resources may be dynamically allocated among a plurality of threads. The second part of resources may be shared by a plurality of threads. The second part of resources may be dynamically allocated among the plurality of threads according to the actual running conditions of the plurality of threads. For example, a quantity demanded by each thread for the hardware resources of the same type may be calculated according to a dynamic adjustment algorithm, and the second part of resources may be dynamically allocated according to the quantity demanded by each thread. The dynamic adjustment algorithm will be explained in detail in the following embodiments.

In the resource allocation method of the embodiments of the present disclosure, for the hardware resources of the same type, proportions of statically allocated resources and dynamically allocated resources are controlled through the configuration information, where the statically allocated part can retain certain basic hardware resources for each thread, avoiding that each thread is not responded for a long time. For a thread having a large demand, the resource quantity allocated may be appropriately increased in a dynamic allocation manner, allowing for more equitable allocation of hardware resources among threads. Moreover, by configuring proportions of statically allocated resources and dynamically allocated resources, a certain type of hardware resources may be completely switched to be dynamically allocated or statically allocated, which can be flexibly adjusted by the user according to an actual requirement.

For example, a dynamic allocation manner is which applies for a resource first occupies the resource first. For example, if a certain thread needs a fixed-point register resource, the thread may directly apply for it, and may wait if applying for no resource until other threads release the fixed-point register resources. However, this manner cannot respond to the actual demand of the thread in time. The following embodiments of the present disclosure provide a dynamic allocation manner that can meet actual demands of threads, make the resource allocation more equitable and reasonable, and increase the resource utilization ratio.

For example, step S240 may include: reallocating, at intervals of a predetermined duration, the second part of resources of each type of hardware resources among the plurality of threads according to the running conditions of the plurality of threads in the predetermined duration.

For example, in order to stabilize the quantity demanded and reduce the power consumption of the dynamic adjustment algorithm, dynamic resource allocation may be carried out at intervals of a period of time. The interval time may be tested in combination with the implementation difficulty of the dynamic algorithm and the characteristics of different hardware resources. A suitable adjustment interval time is selected through overall consideration in terms of performance, power consumption, and implementation difficulty.

For example, the plurality of types of hardware resources include a first type of hardware resources. The first type of hardware resources is, for example, the fixed-point register resources described above. The reallocating, at intervals of a predetermined duration, the second part of resources of each type of hardware resources among the plurality of threads according to the running conditions of the plurality of threads in the predetermined duration may include: determining, at intervals of the predetermined duration, respective quantities demanded by the plurality of threads for the first type of hardware resources according to the running conditions of the plurality of threads in the predetermined duration; and reallocating the second part of resources of the first type of hardware resources among the plurality of threads according to the respective quantities demanded by the plurality of threads for the first type of hardware resources. Based on this manner, the allocation of the second part of resources may be more reasonable and the demand of each thread for different hardware resources may be met.

For example, the determining, at intervals of the predetermined duration, respective quantities demanded by the plurality of threads for the first type of hardware resources according to the running conditions of the plurality of threads may include: counting, at intervals of the predetermined duration, respective counts of the plurality of threads triggering a stall event; and determining the respective quantities demanded by the plurality of threads for the first type of hardware resources according to the counts.

For example, each thread requires different types of hardware resources at different pipeline stages. There may be different statistical solutions for quantities of resources demanded. Different statistical solutions may be selected according to actual situations. The fixed-point registers as a type of hardware resources at the instruction dispatching stage is taken as an example for description in the embodiments of the present disclosure. When the fixed-point registers are insufficient for a certain thread, the stall event may be triggered, and the thread cannot be scheduled for execution. An event counter may be set for each thread, and every time the stall event is triggered, the event counter of the corresponding thread is incremented by 1. The value of the event counter of each thread may be used as the quantity demanded by the thread for the fixed-point registers. The larger the value of the event counter of a certain thread, the greater the demanded quantity of the fixed-point registers, and more fixed-point registers may be dynamically allocated. The smaller the value of the event counter of a certain thread, the smaller the demanded quantity of the fixed-point registers, and the allocated fixed-point registers may be dynamically reduced.

The dynamic adjustment algorithm for resources in the embodiments of the present disclosure is dynamically adjusted according to the quantities demanded by the threads for a certain type of resources. Because each thread has different resource demands for a same type of hardware resources at different pipeline stages, this solution may calculate the quantity demanded by each thread for a certain type of resources in real time and prefer to allocate more hardware resources for the thread demanding a greater quantity. In this way, the actual demands of the threads can be met; the resource allocation is more equitable and reasonable; and the resource utilization ratio can be increased.

For example, the reallocating the second part of resources of the first type of hardware resources among the plurality of threads according to the respective quantities demanded by the plurality of threads for the first type of hardware resources may include: determining a total quantity demanded by the plurality of threads for the first type of hardware resources according to the respective quantities demanded by the plurality of threads for the first type of hardware resources; and determining, from the second part of resources of the first type of hardware resources, a quantity of resources allocated to each thread according to the total quantity demanded and the respective quantities demanded by the plurality of threads for the first type of hardware resources.

For example, the dynamic adjustment algorithm for a certain type of hardware resources is as shown in the following formula (1):
${R}_{i} = \frac{{D}_{i}}{{\sum }_{0}^{n - 1} {D}_{j}} ∗ DRPR ∗ {R}_{total}$ (1)
where i represents a thread Ti; *Rᵢ* represents the number of resources allocated to the thread Ti after dynamic adjustment (i is 0 to n-2); n represents a total number of threads; *Dᵢ* represents a quantity demanded by the thread Ti for the first type of hardware resources; ${\sum }_{0}^{n - 1} {D}_{j}$ represents a total quantity demanded by all threads for the first type of hardware resources; *DRPR* represents the proportion of the second part of resources of the first type of hardware resources; and *Rₜₒₜₐₗ* represents a total quantity of the first type of hardware resources.

For example, apart from the last thread, *Rᵢ* is calculated according to the above formula (1), and rounded down. The resource *R*_{*n*-1} dynamically allocated to the last thread is obtained by subtracting the resources dynamically allocated to the first n-1 threads from the total quantity *Rₜₒₜₐₗ* of the first type of hardware resources:
${R}_{n - 1} = {R}_{total} - {\sum }_{0}^{n - 2} {R}_{i}$ (2)

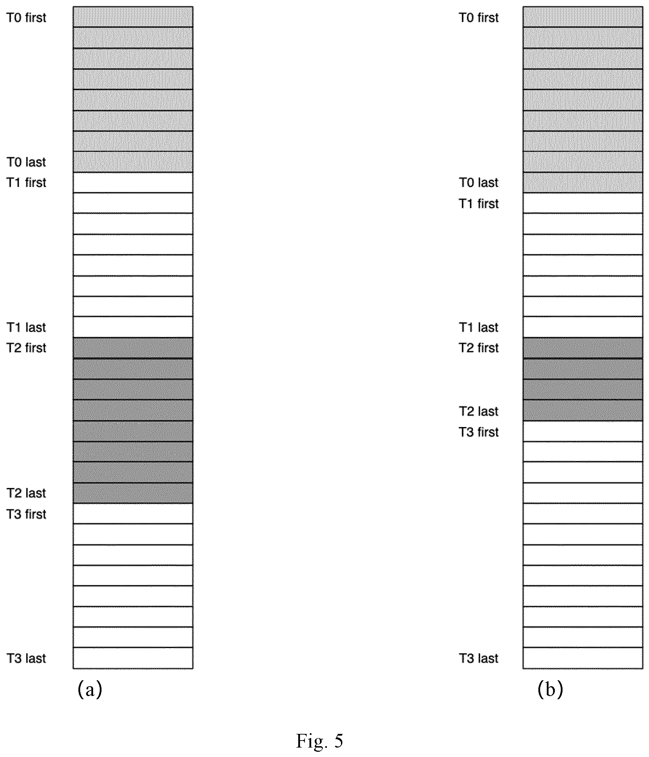

Taking the fixed-point registers as an example, assuming that there are 32 fixed-point registers in total, in the SMT4 mode, the DRPR value is 2. That is, 16 fixed-point registers are statically allocated. If equal allocation is adopted, each thread has 4 fixed-point registers. The remaining 16 fixed-point registers may be allocated dynamically. The initial state is as shown in Table 2 below, and each thread is allocated 8 fixed-point registers. Fig. 5 illustrates a schematic diagram of resource allocations before and after dynamic adjustment provided by at least one embodiment of the present disclosure, where (a) illustrates the resource allocation before dynamic allocation (e.g., the initial state); (b) illustrates the resource allocation after the dynamic allocation, and the gray scales in the figure are merely used for distinguishing between resources allocated to different threads. The resource queue shown in Fig. 5 (a) represents, for example, the second part of resources (e.g., 16 fixed-point registers) of a certain type of hardware resources. In the initial state, the second part of resources may be equally allocated to four threads T0 to T3, and each thread is dynamically allocated with 4 fixed-point registers. The first resource and the last resource of each thread represent a range of use of the fixed-point registers dynamically allocated to each thread.

**Table 2**

| | Statically Allocated Fixed-Point Registers | Dynamically Allocated Fixed-Point Registers | Total Fixed-Point Registers |
|---|---|---|---|
| Thread T0 | 4 | 4 | 8 |
| Thread T1 | 4 | 4 | 8 |
| Thread T2 | 4 | 4 | 8 |
| Thread T3 | 4 | 4 | 8 |
| Total | 16 | 16 | 32 |

For example, after the program runs for a period of time, the quantity demanded by each thread for the fixed-point registers is as shown in Table 3 below.

**Table 3**

| | Value of Event Counter |
|---|---|
| Thread T0 | 700 |
| Thread T1 | 399 |
| Thread T2 | 89 |
| Thread T3 | 802 |
| Total | 1890 |

For example, according to the dynamic adjustment algorithm for resources shown in the above formulas (1) and (2), the number of the fixed-point registers allocated to each thread after dynamic adjustment may be calculated, as shown in Table 4 below. The first resource and the last resource of each thread are adjusted according to the quantity of resources allocated after dynamic adjustment to adjust the available resource range. The resource queue shown in Fig. 5 (b) represents, for example, the second part of resources (e.g., 16 fixed-point registers) of a certain type of hardware resources. After dynamic adjustment, the second part of resources may be allocated to four threads T0 to T3 as needed. The first resource and the last resource of each thread represent a range of use of the fixed-point registers dynamically allocated to each thread.

**Table 4**

| | Statically Allocated Fixed-Point Registers | Dynamically Allocated Fixed-Point Registers | Total Fixed-Point Registers |
|---|---|---|---|
| Thread T0 | 4 | 5 | 9 |
| Thread T1 | 4 | 3 | 7 |
| Thread T2 | 4 | 0 | 4 |
| Thread T3 | 4 | 8 | 12 |
| Total | 16 | 16 | 32 |

For example, the specific use methods (such as insertion or fetching) of different hardware resources in each thread are not limited in the present disclosure, and an optimal algorithm may be adopted according to an actual situation.

For example, in some embodiments, the DRPR value of each type of hardware resources may keep unchanged after being set.

For example, in some other embodiments, the DRPR value of each type of hardware resources may be dynamically adjusted according to the actual running conditions of the plurality of threads. For example, for the first type of hardware resources, whether the DRPR value corresponding to the first type of hardware resources is adjusted may be determined according to the quantities demanded by the threads for the first type of hardware resources. For example, if the quantity demanded by a certain thread for the first type of hardware resources is greater than a demanded quantity threshold, it may be considered that the first type of hardware resources allocated to the thread cannot meet the demand of the thread for the first type of hardware resources, and the proportion of dynamic allocation of the first type of hardware resources may be increased (i.e., the proportion of the second part of resources is increased). In this way, the quantity of the first type of hardware resources allocated to the thread may be increased. For another example, if a difference between the quantity demanded by a first thread for the first type of hardware resources and the quantity demanded by a second thread for the first type of hardware resources is greater than a certain threshold, it may be considered that there is a great difference in the demanded quantity of the first type of hardware resources between threads, and the proportion of dynamic allocation of the first type of hardware resources may be increased (i.e., the proportion of the second part of resources is increased). For another example, if the difference between the quantity demanded by the first thread for the first type of hardware resources and the quantity demanded by the second thread for the first type of hardware resources is less than the certain threshold, it may be considered that the demanded quantities of the first type of hardware resources are balanced between threads, and the proportion of dynamic allocation of the first type of hardware resources may be reduced (i.e., the proportion of the second part of resources is increased). Thus, not only can the demands of the threads for resources be met, but also the power consumption caused by the dynamic adjustment algorithm can be reduced.

According to the resource allocation method of the embodiments of the present disclosure, the hardware resource corresponding to each thread is dynamically adjusted in real time by setting the SMT dynamically adjusted resource proportion DRPR and counting the actual quantity demanded by each thread for a certain type of hardware resources in the actual program running process. The phenomena of increased response time and reduced performance of part of threads due to unequal resource allocation are solved or reduced.

The resource allocation method of the embodiments of the present disclosure is flexible. If the proportion of dynamic allocation is 0, resources are all statically partitioned, and all types of hardware resources may be equally or unequally allocated according to the number of threads supported by SMT. If the proportion of dynamic allocation is 1, resources are all dynamically shared. That is, all types of hardware resources are dynamically shared by all threads. If the proportion is between 0 and 1, part of resources are statically and equally allocated, and part of resources are dynamically allocated according to the quantities demanded by the threads. The problem that the previous single allocation mode cannot meet diversified user demands is solved. The resource allocation method can be widely applied to different application scenarios.

In the resource allocation method of the embodiments of the present disclosure, the hardware resources corresponding to each thread are dynamically adjusted in real time by counting the actual quantity demanded by each thread for a certain type of hardware resources in the actual program running process.

In the resource allocation method of the embodiments of the present disclosure, for hardware resources of the same type, part of the resources are statically and equally allocated, and part of resources are dynamically allocated according to the quantities demanded by threads. Thus, certain basic hardware resources are retained for each thread, avoiding that each thread is not responded for a long time. Also, the hardware resources for a thread having a larger demand are increased approximately, providing more equality between threads.

The resource allocation method of the embodiments of the present disclosure is not limited to the number of threads and applicable to SMT2, SMT4, SMT8, etc.

The resource allocation method of the embodiments of the present disclosure is applicable to the allocation of different types of hardware resources of different pipelines of the CPU architecture, and not limited to a single specific resource.

In the resource allocation method of the embodiments of the present disclosure, the specific use methods (such as insertion or fetching) of different hardware resources in each thread may be determined by using an optimal algorithm (such as queue or stack) according to an actual situation.

In the resource allocation method of the embodiments of the present disclosure, in order to reduce the difficulty of the dynamic adjustment algorithm, the manner of rounding down is adopted when calculating the demand quantity of resources after dynamic adjustment. Moreover, a more accurate calculation manner may also be adopted to reduce an error caused by the manner of rounding down.

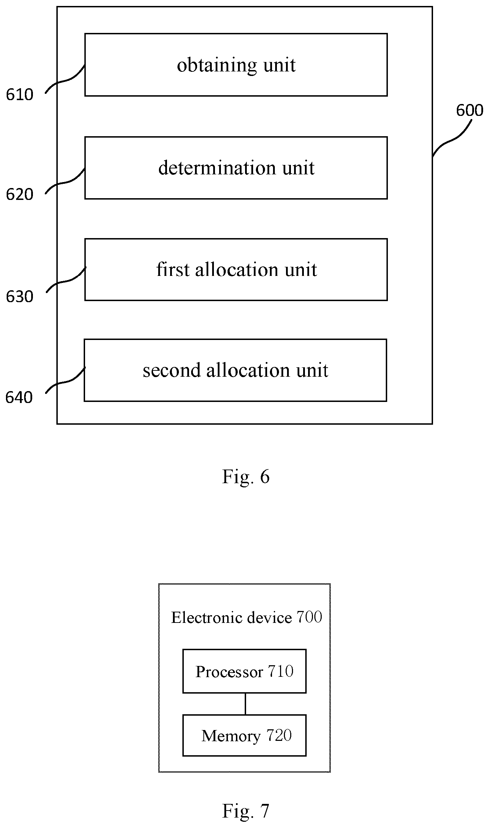

Fig. 6 illustrates a schematic block diagram of a resource allocation apparatus 600 provided by at least one embodiment of the present disclosure.

For example, as shown in Fig. 6, the resource allocation apparatus 600 includes an obtaining unit 610, a determination unit 620, a first allocation unit 630, and a second allocation unit 640. These components are interconnected by a bus system and/or a connection mechanism in other form (not shown). For example, these modules may be implemented by hardware (e.g., circuit) modules or software modules, or any combination of both, which are the same in the following embodiments and which will not be redundantly described. For example, these units may be implemented by a central processing unit (CPU), a graphics processing unit (GPU), a tensor processing unit (TPU), or a field programmable gate array (FPGA), or a processing unit in other form having data processing capability and/or instruction execution capability, as well as corresponding computer instructions. It should be noted that the components and structures of the resource allocation apparatus 600 shown in Fig. 6 are merely exemplary and non-limiting. As needed, the resource allocation apparatus 600 may further include other components and structures.

The obtaining unit 610 is configured to obtain configuration information corresponding to each of a plurality of types of hardware resources. The obtaining unit 610 may perform, for example, step S210 described in Fig. 2.

The determination unit 620 is configured to determine a proportion of a first part of resources and a proportion of a second part of resources in each type of hardware resources according to the configuration information corresponding to each hardware resource. The determination unit 620 may perform, for example, step S220 described in Fig. 2.

The first allocation unit 630 is configured to allocate the first part of resources of each type of hardware resources to a plurality of threads according to a predetermined allocation ratio. The first allocation unit 630 may perform, for example, step S230 described in Fig. 2.

The second allocation unit 640 is configured to allocate the second part of resources of each type of hardware resources to at least part of the plurality of threads according to running conditions of the plurality of threads. The second allocation unit 640 may perform, for example, step S240 described in Fig. 2.

For example, the obtaining unit 610, the determination unit 620, the first allocation unit 630, and the second allocation unit 640 may be hardware, software, firmware, and any feasible combination thereof. For example, the obtaining unit 610, the determination unit 620, the first allocation unit 630, and the second allocation unit 640 may be special purpose or general purpose circuits, chips, or apparatuses, etc., or may be a combination of a processor and a memory. The embodiments of the present disclosure have no particular limitation on the specific implementation form of each unit described above.

For example, the obtaining unit 610, the determination unit 620, the first allocation unit 630, and the second allocation unit 640 may include codes and programs stored in the memory. The processor may execute the codes and the programs to implement some or all functions of the obtaining unit 610, the determination unit 620, the first allocation unit 630, and the second allocation unit 640 as described above. For example, the obtaining unit 610, the determination unit 620, the first allocation unit 630, and the second allocation unit 640 may be special purpose hardware devices to implement some or all functions of the obtaining unit 610, the determination unit 620, the first allocation unit 630, and the second allocation unit 640 as described above. For example, the obtaining unit 610, the determination unit 620, the first allocation unit 630, and the second allocation unit 640 may be one circuit board or a combination of a plurality of circuit boards to implement the functions described above. In the embodiments of the present disclosure, the one circuit board or the combination of a plurality of circuit may include: (1) one or more processors; (2) one or more non-transitory memories connected to the processor(s); and (3) firmware executable by the processor(s) and stored in the memory(s).

It needs to be noted that in the embodiments of the present disclosure, the units of the resource allocation apparatus 600 correspond to the steps of the resource allocation method described above. Specific functions of the resource allocation apparatus 600 may be known with reference to the related descriptions regarding the resource allocation method described above, which will not be described here redundantly. The components and structures of the resource allocation apparatus 600 shown in Fig. 6 are merely exemplary and non-limiting. As needed, the resource allocation apparatus 600 may further include other components and structures. The resource allocation apparatus 600 may include more or less circuits or units, and connection relationships between the circuits or units are not limited, which may be set according to actual needs. Each circuit or unit, which may be specifically formed in a non-limiting manner, may be composed of analog devices according to a circuit principle, and may also be composed of digital chips, or formed in other proper manners.

For example, in the resource allocation apparatus provided by at least one example of the above embodiments of the present disclosure, the proportion of the first part of resources and the proportion of the second part of resources are values greater than or equal to 0 and less than or equal to 1, and a sum of the proportion of the first part of resources and the proportion of the second part of resources is equal to 1.

For example, in the resource allocation apparatus provided by at least one example of the above embodiments of the present disclosure, the second allocation unit is further configured to: reallocate, at intervals of a predetermined duration, the second part of resources of each type of hardware resources among the plurality of threads according to the running conditions of the plurality of threads in the predetermined duration.

For example, in the resource allocation apparatus provided by at least one example of the above embodiments of the present disclosure, the plurality of types of hardware resources include a first type of hardware resources; and the second allocation unit is further configured to: determine, at intervals of the predetermined duration, respective quantities demanded by the plurality of threads for the first type of hardware resources according to the running conditions of the plurality of threads in the predetermined duration; and reallocate the second part of resources of the first type of hardware resources among the plurality of threads according to the respective quantities demanded by the plurality of threads for the first type of hardware resources.

For example, in the resource allocation apparatus provided by at least one example of the above embodiments of the present disclosure, the second allocation unit is further configured to: count, at intervals of the predetermined duration, respective counts of the plurality of threads triggering a stall event; and determine the respective quantities demanded by the plurality of threads for the first type of hardware resources according to the counts.

For example, in the resource allocation apparatus provided by at least one example of the above embodiments of the present disclosure, the second allocation unit is further configured to: determine a total quantity demanded by the plurality of threads for the first type of hardware resources according to the respective quantities demanded by the plurality of threads for the first type of hardware resources; and determine, from the second part of resources of the first type of hardware resources, a quantity of resources allocated to each thread according to the total quantity demanded and the respective quantities demanded by the plurality of threads for the first type of hardware resources.

At least one embodiment of the present disclosure further provides an electronic device. The electronic device includes a processor and a memory. The memory stores one or more computer program modules. The one or more computer program modules are configured to be executed by the processor to implement the resource allocation method described above. The electronic device can retain certain basic hardware resources for each thread, avoiding that each thread is not responded for a long time. For a thread having a large demand, the resource quantity allocated may be appropriately increased in a dynamic allocation manner, allowing for more equitable allocation of hardware resources among threads. Moreover, by configuring proportions of statically allocated resources and dynamically allocated resources, a certain hardware resource may be completely switched to be dynamically allocated or statically allocated, which can be flexibly adjusted by the user according to an actual requirement.

Fig. 7 illustrates a schematic block diagram of an electronic device provided by some embodiments of the present disclosure. As illustrated in Fig. 7, the electronic device 700 includes a processor 710 and a memory 720. The memory 720 is configured to store non-transitory computer-readable instructions (e.g., one or more computer program modules). The processor 710 is configured to execute the non-transitory computer-readable instructions, and when the non-transitory computer-readable instructions are executed by the processor 710, one or more steps in the resource allocation method described above are performed. The memory 720 and the processor 710 may be interconnected by a bus system and/or other forms of connection mechanisms (not illustrated). The specific realization of each step of the resource allocation method and related explanations can be found in the embodiment of the resource allocation method described above, and the repetition will not be repeated here.

It should be noted that the components of the electronic device 700 shown in Fig. 7 are exemplary and not limiting, and the electronic device 700 may have other components as needed for practical applications.

For example, the processor 710 and the memory 720 may communicate with each other directly or indirectly.

For example, the processor 710 and the memory 720 may communicate via a network. The network may include a wireless network, a wired network, and/or any combination of a wireless network and a wired network. The processor 710 and the memory 720 may also communicate with each other via a system bus, which is not limited by the disclosure.

For example, the processor 710 and the memory 720 may be set up on the server side (or in the cloud).

For example, the processor 710 may control other components in the electronic device 700 to perform desired functions. For example, the processor 710 is a central processing unit (CPU), a graphics processing unit (GPU), or other forms of processing units having data processing capabilities and/or program execution capabilities. For example, the central processing unit (CPU) may be an X86 or ARM architecture, and the like. The processor 710 may be a general-purpose processor or a special-purpose processor, and can control other components in the electronic device 400 to perform desired functions.

For example, the memory 720 includes any combination of one or more computer program products, which may include various forms of computer-readable storage media, such as volatile memory and/or non-volatile memory. The volatile memory may include, for example, random access memory (RAM) and/or cache memory, etc. The non-volatile memory may include, for example, read-only memory (ROM), hard disk, erasable programmable read-only memory (EPROM), compact disk read-only memory (CD-ROM), USB memory, flash memory, and the like. One or more computer program modules may be stored on the computer-readable storage medium, and the processor 710 can execute one or more computer program modules to achieve various functions of the electronic device 700. Various application programs, various data, and various data used and/or generated by the application programs may also be stored in the computer-readable storage medium.

For example, in some embodiments, the electronic device 700 may be a cell phone, a tablet computer, a laptop computer, a server, and the like.

It should be noted that, in the embodiments of the present disclosure, the specific functions and technical effects of the electronic device 700 may refer to the above description about the resource allocation method, which will not be repeated here.

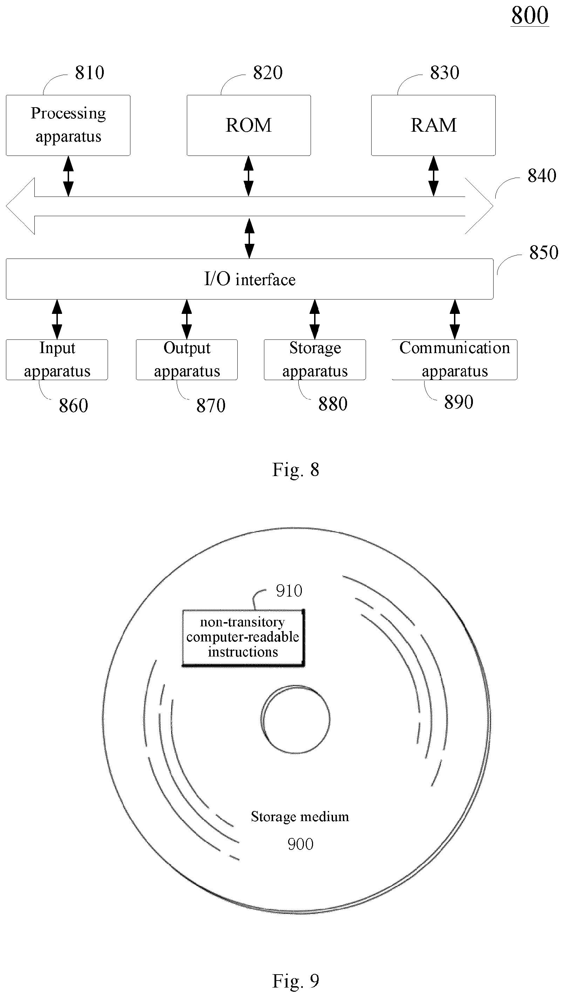

Fig. 8 illustrates a schematic block diagram of another electronic device provided by some embodiments of the present disclosure. The electronic device 800 is, for example, suitable for implementing the resource allocation method provided by the embodiments of the present disclosure. The electronic device 800 may be a terminal device or the like. It should be noted that the electronic device 800 illustrated in Fig. 8 is only an example, which does not limit the functions and application scope of the embodiments of the present disclosure.

As illustrated in Fig. 8, the electronic device 800 includes a processing apparatus 810 (such as a central processing unit, a graphics processing unit, etc.) that can perform various appropriate actions and processes in accordance with a program stored in read-only memory (ROM) 820 or loaded from a storage apparatus 880 into random access memory (RAM) 830. In the RAM 830, various programs and data required for the operation of the electronic device 800 are also stored. The processing apparatus 810, the ROM 820 and the RAM 830 are connected to each other through a bus 840. An input/output (I/O) interface 850 is also connected to the bus 840.

Usually, the following apparatus may be connected to the I/O interface 850: an input apparatus 860 including, for example, a touch screen, a touch pad, a keyboard, a mouse, a camera, a microphone, an accelerometer, a gyroscope, or the like; an output apparatus 870 including, for example, a liquid crystal display (LCD), a loudspeaker, a vibrator, or the like; the storage apparatus 880 including, for example, a magnetic tape, a hard disk, or the like; and a communication apparatus 890. The communication apparatus 890 may allow the electronic device 800 to be in wireless or wired communication with other devices to exchange data. While Fig. 8 illustrates the electronic device 800 having various apparatuses, it should be understood that not all of the illustrated apparatuses are necessarily implemented or included, and the electronic device 800 may alternatively implement or have more or fewer apparatuses.

For example, according to the embodiments of the present disclosure, the resource allocation method described above can be implemented as a computer software program. For example, the embodiments of the present disclosure include a computer program product, which includes a computer program carried by a non-transitory computer-readable medium, and the computer program includes program codes for performing the resource allocation method described above. In such embodiments, the computer program may be downloaded online through the communication apparatus 890 and installed, or may be installed from the storage apparatus 880, or may be installed from the ROM 820. When the computer program is executed by the processing apparatus 810, the functions defined in the resource allocation method provided by the embodiments of the present disclosure can be achieved.

At least one embodiment of the present disclosure further provides a computer-readable storage medium for storing non-transitory computer-readable instructions, and when the non-transitory computer-readable instructions are executed by a computer, the above-mentioned resource allocation method is achieved. By using the computer-readable storage medium, certain basic hardware resources may be retained for each thread, avoiding that each thread is not responded for a long time. For a thread having a large demand, the resource quantity allocated may be appropriately increased in a dynamic allocation manner, allowing for more equitable allocation of hardware resources among threads. Moreover, by configuring proportions of statically allocated resources and dynamically allocated resources, a certain hardware resource may be completely switched to be dynamically allocated or statically allocated, which can be flexibly adjusted by the user according to an actual requirement.

Fig. 9 illustrates a schematic diagram of a storage medium provided by some embodiments of the present disclosure. As illustrated in Fig. 9, the storage medium 900 is configured to store non-transitory computer-readable instructions 910. For example, when the non-transitory computer-readable instructions 910 are executed by a computer, one or more steps in the resource allocation method described above may be performed.

For example, the storage medium 900 can be applied to the above-mentioned electronic device 700. For example, the storage medium 900 is the memory 720 in the electronic device 700 illustrated in Fig. 7. For example, the relevant descriptions about the storage medium 900 can refer to the corresponding descriptions of the memory 720 in the electronic device 700 illustrated in Fig. 7, which will not be repeated here.

The above description is only the explanation of a partial embodiment of the present disclosure and the used technical principle. It should be understood by those skilled in the art that the disclosure scope involved in the disclosure is not limited to the technical solution formed by the specific combination of the above technical features, but also covers other technical solutions formed by any combination of the above technical features or their equivalent features without departing from the above disclosed concept. For example, the technical solution formed by replacing the above features with (but not limited to) technical features with similar functions disclosed in the disclosure.

In addition, although the operations are depicted in a specific order, this should not be understood as requiring these operations to be performed in the specific order shown or in a sequential order. Under certain circumstances, multitasking and parallel processing may be beneficial. Similarly, although several specific implementation details are included in the above discussion, these should not be interpreted as limiting the scope of the present disclosure. Some features described in the context of separate embodiments may also be implemented in a single embodiment in combination. On the contrary, various features described in the context of a single embodiment may also be implemented in a plurality of embodiments alone or in any suitable sub-combination.

Although the subject matter has been described in language specific to structural features and/or logical actions of methods, it should be understood that the subject matter defined in the appended claims is not necessarily limited to the specific features or actions described above. On the contrary, the specific features and actions described above are only example forms of realizing the claims.

For the present disclosure, the following statements should be noted:
(1) The drawings involve only the structure(s) in connection with the embodiment(s) of the present disclosure, and other structure(s) can be referred to common design(s).
(2) In case of no conflict, features in one embodiment or in different embodiments can be combined to obtain new embodiments.

What have been described above are only specific implementations of the present disclosure, the protection scope of the present disclosure is not limited thereto, and the protection scope of the present disclosure should be based on the protection scope of the claims.

## Claims

1. A resource allocation method, wherein the method is applied for a processer with Simultaneous Multi-Threading, SMT, the processor is configured with N threads, N is an integer greater than 1, and wherein the method comprises:
obtaining configuration information corresponding to each of a plurality of types of hardware resources(S210);
determining a proportion of statically allocated resources and a proportion of dynamically allocated resources in each type of hardware resources according to the configuration information corresponding to each type of hardware resources(S220);
allocating the statically allocated resources of each type of hardware resources to the N threads according to a predetermined allocation ratio(S230); and
allocating the dynamically allocated resources of each type of hardware resources to at least part of the N threads according to running conditions of the N threads(S240).

2. The resource allocation method according to claim 1, wherein the proportion of the statically allocated resources and the proportion of the dynamically allocated resources are values greater than or equal to 0 and less than or equal to 1, and a sum of the proportion of the statically allocated resources and the proportion of the dynamically allocated resources is equal to 1.

3. The resource allocation method according to claim 1 or 2, wherein the allocating the dynamically allocated resources of each type of hardware resources to at least part of the N threads according to running conditions of the N threads comprises:
reallocating, at intervals of a predetermined duration, the dynamically allocated resources of each type of hardware resources among the N threads according to the running conditions of the N threads in the predetermined duration.

4. The resource allocation method according to claim 3, wherein the plurality of types of hardware resources comprise a first type of hardware resources; and
the reallocating, at intervals of the predetermined duration, the dynamically allocated resources of each type of hardware resources among the N threads according to the running conditions of the N threads in the predetermined duration comprises:
determining, at intervals of the predetermined duration, respective quantities demanded by the N threads for the first type of hardware resources according to the running conditions of the N threads in the predetermined duration; and
reallocating the dynamically allocated resources of the first type of hardware resources among the N threads according to the respective quantities demanded by the N threads for the first type of hardware resources.

5. The resource allocation method according to claim 4, wherein the determining, at intervals of the predetermined duration, respective quantities demanded by the N threads for the first type of hardware resources according to the running conditions of the N threads comprises:
counting, at intervals of the predetermined duration, respective counts of the N threads triggering a stall event; and
determining the respective quantities demanded by the N threads for the first type of hardware resources according to the counts.

6. The resource allocation method according to claim 4 or 5, wherein the reallocating the dynamically allocated resources of the first type of hardware resources among the N threads according to the respective quantities demanded by the plurality of threads for the first type of hardware resources comprises:
determining a total quantity demanded by the N threads for the first type of hardware resources according to the respective quantities demanded by the N threads for the first type of hardware resources; and
determining, from the dynamically allocated resources of the first type of hardware resources, a quantity of resources allocated to each thread according to the total quantity demanded and the respective quantities demanded by the N threads for the first type of hardware resources.

7. A resource allocation apparatus, wherein the apparatus is configured in a processer with Simultaneous Multi-Threading, SMT, the processor is configured with N threads, N is an integer greater than 1, and wherein the apparatus comprises:
an obtaining unit (610) configured to obtain configuration information corresponding to each of a plurality of types of hardware resources;
a determination unit (620) configured to determine a proportion of a statically allocated resources and a proportion of dynamically allocated resources in each type of hardware resources according to the configuration information corresponding to each hardware resource;
a first allocation unit (630) configured to allocate the statically allocated resources of each type of hardware resources to the N threads according to a predetermined allocation ratio; and
a second allocation unit (640) configured to allocate the dynamically allocated resources of each type of hardware resources to at least part of the N threads according to running conditions of the N threads.

8. The resource allocation apparatus according to claim 7, wherein the proportion of the statically allocated resources and the proportion of the dynamically allocated resources are values greater than or equal to 0 and less than or equal to 1, and a sum of the proportion of the statically allocated resources and the proportion of the dynamically allocated resources is equal to 1.

9. The resource allocation apparatus according to claim 7 or 8, wherein the second allocation unit is further configured to:
reallocate, at intervals of a predetermined duration, the dynamically allocated resources of each type of hardware resources among the N threads according to the running conditions of the N threads in the predetermined duration.

10. The resource allocation apparatus according to claim 9, wherein the plurality of types of hardware resources comprise a first type of hardware resources; and
the second allocation unit is further configured to:
determine, at intervals of the predetermined duration, respective quantities demanded by the N threads for the first type of hardware resources according to the running conditions of the N threads in the predetermined duration; and
reallocate the dynamically allocated resources of the first type of hardware resources among the N threads according to the respective quantities demanded by the N threads for the first type of hardware resources.

11. The resource allocation apparatus according to claim 10, wherein the second allocation unit is further configured to:
count, at intervals of the predetermined duration, respective counts of the N threads triggering a stall event; and
determine the respective quantities demanded by the N threads for the first type of hardware resources according to the counts.

12. The resource allocation apparatus according to claim 10 or 11, wherein the second allocation unit is further configured to:
determine a total quantity demanded by the N threads for the first type of hardware resources according to the respective quantities demanded by the N threads for the first type of hardware resources; and
determine, from the dynamically allocated resources of the first type of hardware resources, a quantity of resources allocated to each thread according to the total quantity demanded and the respective quantities demanded by the N threads for the first type of hardware resources.

13. A computer program product stored on a memory storing one or more computer program modules;
wherein the one or more computer program modules when executed by a processor with Simultaneous Multi-Threading, SMT, implement the resource allocation method according to any one of claims 1 to 6.

14. A computer-readable storage medium, storing non-transitory computer-readable instructions which, when executed by a computer, implement the resource allocation method according to any one of claims 1 to 6.

## Patentansprüche

1. Ressourcenzuweisungsverfahren, wobei das Verfahren für einen Prozessor mit Simultaneous Multi-Threading, SMT, angewendet wird, der Prozessor mit N Threads konfiguriert ist und N eine Ganzzahl größer als 1 ist, und wobei das Verfahren Folgendes umfasst:
Erhalten von Konfigurationsinformationen, die jedem einer Vielzahl von Typen von Hardware-Ressourcen entsprechen (S210);
Bestimmen eines Anteils statisch zugewiesener Ressourcen und eines Anteils dynamisch zugewiesener Ressourcen in jedem Typ von Hardware-Ressourcen gemäß den Konfigurationsinformationen, die jedem Typ von Hardware-Ressourcen entsprechen (S220);
Zuweisen der statisch zugewiesenen Ressourcen jedes Typs von Hardware-Ressourcen zu den N Threads gemäß einem vorbestimmten Zuweisungsverhältnis (S230); und
Zuweisen der dynamisch zugewiesenen Ressourcen jedes Typs von Hardware-Ressourcen zu mindestens einem Teil der N Threads gemäß den Ausführungsbedingungen der N Threads (S240).

2. Ressourcenzuweisungsverfahren nach Anspruch 1, wobei der Anteil der statisch zugewiesenen Ressourcen und der Anteil der dynamisch zugewiesenen Ressourcen Werte größer gleich 0 und kleiner gleich 1 sind und eine Summe aus dem Anteil der statisch zugewiesenen Ressourcen und dem Anteil der dynamisch zugewiesenen Ressourcen gleich 1 ist.

3. Ressourcenzuweisungsverfahren nach Anspruch 1 oder 2, wobei das Zuweisen der dynamisch zugewiesenen Ressourcen jedes Typs von Hardware-Ressourcen zu mindestens einem Teil der N Threads gemäß den Ausführungsbedingungen der N Threads Folgendes umfasst:
Neuzuweisen, in Intervallen einer vorbestimmten Dauer, der dynamisch zugewiesenen Ressourcen jedes Typs von Hardware-Ressourcen unter den N Threads gemäß den Ausführungsbedingungen der N Threads in der vorbestimmten Dauer.

4. Ressourcenzuweisungsverfahren nach Anspruch 3, wobei die Vielzahl von Typen von Hardware-Ressourcen einen ersten Typ von Hardware-Ressourcen umfassen; und
das Neuzuweisen, in Intervallen einer vorbestimmten Dauer, der dynamisch zugewiesenen Ressourcen jedes Typs von Hardware-Ressourcen unter den N Threads gemäß den Ausführungsbedingungen der N Threads in der vorbestimmten Dauer Folgendes umfasst:
Bestimmen, in Intervallen der vorbestimmten Dauer, der jeweiligen Mengen, die von den N Threads für den ersten Typ von Hardware-Ressourcen gemäß den Auführungsbedingungen der N Threads in der vorbestimmten Dauer gefordert werden; und
Neuzuweisen der dynamisch zugewiesenen Ressourcen des ersten Typs von Hardware-Ressourcen unter den N Threads gemäß den jeweiligen Mengen, die von den N Threads für den ersten Typ von Hardware-Ressourcen gefordert werden.

5. Ressourcenzuweisungsverfahren nach Anspruch 4, wobei das Bestimmen, in Intervallen der vorbestimmten Dauer, der jeweiligen Mengen, die von den N Threads für den ersten Typ von Hardware-Ressourcen gemäß den Auführungsbedingungen der N Threads gefordert werden, Folgendes umfasst:
Zählen, in Intervallen der vorbestimmten Dauer, der jeweiligen Anzahl der N Threads, die ein Verzögerungsereignis auslösen; und
Bestimmen der jeweiligen Mengen, die von den N Threads für den ersten Typ von Hardware-Ressourcen gemäß der Anzahl gefordert werden.

6. Ressourcenzuweisungsverfahren nach Anspruch 4 oder 5, wobei das Neuzuweisen der dynamisch zugewiesenen Ressourcen des ersten Typs von Hardware-Ressourcen unter den N Threads gemäß den jeweiligen Mengen, die von der Vielzahl von Threads für den ersten Typ von Hardware-Ressourcen gefordert werden, Folgendes umfasst:
Bestimmen einer Gesamtmenge, die von den N Threads für den ersten Typ von Hardware-Ressourcen gemäß den jeweiligen Mengen, die von den N Threads für den ersten Typ von Hardware-Ressourcen gefordert werden, gefordert wird; und
Bestimmen, aus den dynamisch zugewiesenen Ressourcen des ersten Typs von Hardware-Ressourcen, einer Menge an Ressourcen, die jedem Thread gemäß der angeforderten Gesamtmenge und den jeweiligen von den N Threads für den ersten Typ von Hardware-Ressourcen angeforderten Mengen zugewiesen sind.

7. Ressourcenzuweisungsvorrichtung, wobei die Vorrichtung in einem Prozessor mit Simultaneous Multi-Threading, SMT, konfiguriert ist, der Prozessor mit N Threads konfiguriert ist und N eine Ganzzahl größer als 1 ist, und wobei die Vorrichtung Folgendes umfasst:
eine Erhaltungseinheit (610), die so konfiguriert ist, dass sie Konfigurationsinformationen erhält, die jedem einer Vielzahl von Typen von Hardware-Ressourcen entsprechen;
eine Bestimmungseinheit (620), die so konfiguriert ist, dass sie einen Anteil einer statisch zugewiesenen Ressourcen und einen Anteil dynamisch zugewiesener Ressourcen in jedem Typ von Hardware-Ressourcen gemäß den Konfigurationsinformationen, die jeder Hardware-Ressource entsprechen, bestimmt;
eine erste Zuweisungseinheit (630), die so konfiguriert ist, dass sie die statisch zugewiesenen Ressourcen jedes Typs von Hardware-Ressourcen zu den N Threads gemäß einem vorbestimmten Zuweisungsverhältnis zuweist; und
eine zweite Zuweisungseinheit (640), die so konfiguriert ist, dass sie die dynamisch zugewiesenen Ressourcen jedes Typs von Hardware-Ressourcen mindestens einem Teil der N Threads gemäß den Ausführungsbedingungen der N Threads zuweist.

8. Ressourcenzuweisungsvorrichtung nach Anspruch 7, wobei der Anteil der statisch zugewiesenen Ressourcen und der Anteil der dynamisch zugewiesenen Ressourcen Werte größer gleich 0 und kleiner gleich 1 sind und eine Summe aus dem Anteil der statisch zugewiesenen Ressourcen und dem Anteil der dynamisch zugewiesenen Ressourcen gleich 1 ist.

9. Ressourcenzuweisungsvorrichtung nach Anspruch 7 oder 8, wobei die zweite Zuweisungseinheit ferner für Folgendes konfiguriert ist:
Neuzuweisen, in Intervallen einer vorbestimmten Dauer, der dynamisch zugewiesenen Ressourcen jedes Typs von Hardware-Ressourcen unter den N Threads gemäß den Ausführungsbedingungen der N Threads in der vorbestimmten Dauer.

10. Ressourcenzuweisungsvorrichtung nach Anspruch 9, wobei die Vielzahl von Typen von Hardware-Ressourcen einen ersten Typ von Hardware-Ressourcen umfassen; und
die zweite Zuweisungseinheit ferner für Folgendes konfiguriert ist:
Bestimmen, in Intervallen der vorbestimmten Dauer, der jeweiligen Mengen, die von den N Threads für den ersten Typ von Hardware-Ressourcen gemäß den Auführungsbedingungen der N Threads in der vorbestimmten Dauer gefordert werden; und
Neuzuweisen der dynamisch zugewiesenen Ressourcen des ersten Typs von Hardware-Ressourcen unter den N Threads gemäß den jeweiligen Mengen, die von den N Threads für den ersten Typ von Hardware-Ressourcen gefordert werden.

11. Ressourcenzuweisungsvorrichtung nach Anspruch 10, wobei die zweite Zuweisungseinheit ferner für Folgendes konfiguriert ist:
Zählen, in Intervallen der vorbestimmten Dauer, der jeweiligen Anzahl der N Threads, die ein Verzögerungsereignis auslösen; und
Bestimmen der jeweiligen Mengen, die von den N Threads für den ersten Typ von Hardware-Ressourcen gemäß der Anzahl gefordert werden.

12. Ressourcenzuweisungsvorrichtung nach Anspruch 10 oder 11, wobei die zweite Zuweisungseinheit ferner für Folgendes konfiguriert ist:
Bestimmen einer Gesamtmenge, die von den N Threads für den ersten Typ von Hardware-Ressourcen gemäß den jeweiligen Mengen, die von den N Threads für den ersten Typ von Hardware-Ressourcen gefordert werden, gefordert wird; und
Bestimmen, aus den dynamisch zugewiesenen Ressourcen des ersten Typs von Hardware-Ressourcen, einer Menge an Ressourcen, die jedem Thread gemäß der angeforderten Gesamtmenge und den jeweiligen Mengen, die von den N Threads für den ersten Typ von Hardware-Ressourcen angefordert werden, zugewiesen sind.

13. Computerprogrammprodukt, das in einem Speicher gespeichert ist, in dem ein oder mehrere Computerprogrammmodule gespeichert sind;
wobei das eine oder die mehreren Computerprogrammmodule, wenn sie von einem Prozessor mit Simultaneous Multi-Threading, SMT, ausgeführt werden, das Ressourcenzuweisungsverfahren nach einem der Ansprüche 1 bis 6 implementieren.

14. Computerlesbares Speichermedium, das nicht vorübergehende, computerlesbare Anweisungen speichert, die, wenn sie von einem Computer ausgeführt werden, das Ressourcenzuweisungsverfahren nach einem der Ansprüche 1 bis 6 implementieren.

## Revendications

1. Procédé d'allocation de ressources, dans lequel le procédé est appliqué à un processeur doté de la technologie SMT (Simultaneous Multi-Threading), le processeur étant configuré avec N threads, N étant un nombre entier supérieur à 1, et dans lequel le procédé comprend :
l'obtention d'informations de configuration correspondant à chacun d'une pluralité de types de ressources matérielles (S210) ;
déterminer une proportion de ressources allouées de manière statique et une proportion de ressources allouées de manière dynamique dans chaque type de ressources matérielles, en fonction des informations de configuration correspondant à chaque type de ressources matérielles (S220) ;
allouer les ressources allouées de manière statique de chaque type de ressources matérielles aux N threads selon un rapport d'allocation prédéterminé (S230) ; et
allouer les ressources allouées dynamiquement de chaque type de ressources matérielles à au moins une partie des N threads en fonction des conditions d'exécution des N threads (S240).

2. Procédé d'allocation de ressources selon la revendication 1, dans lequel la proportion des ressources allouées de manière statique et la proportion des ressources allouées de manière dynamique sont des valeurs supérieures ou égales à 0 et inférieures ou égales à 1, et la somme de la proportion des ressources allouées de manière statique et de la proportion des ressources allouées de manière dynamique est égale à 1.

3. Procédé d'allocation de ressources selon la revendication 1 ou 2, dans lequel l'allocation des ressources allouées dynamiquement de chaque type de ressources matérielles à au moins une partie des N threads en fonction des conditions d'exécution des N threads comprend :
la réallocation, à des intervalles d'une durée prédéterminée, des ressources allouées de manière dynamique de chaque type de ressources matérielles entre les N threads en fonction des conditions d'exécution des N threads au cours de la durée prédéterminée.

4. Procédé d'allocation de ressources selon la revendication 3, dans lequel la pluralité de types de ressources matérielles comprend un premier type de ressources matérielles ; et
la réaffectation, à des intervalles de la durée prédéterminée, des ressources allouées dynamiquement de chaque type de ressources matérielles entre les N threads en fonction des conditions d'exécution des N threads au cours de la durée prédéterminée comprend :
déterminer, à des intervalles d'une durée prédéterminée, les quantités respectives demandées par les N threads pour le premier type de ressources matérielles, en fonction des conditions d'exécution des N threads au cours de cette durée prédéterminée ; et
réaffecter les ressources allouées dynamiquement du premier type de ressources matérielles entre les N threads en fonction des quantités respectives demandées par les N threads pour le premier type de ressources matérielles.

5. Procédé d'allocation de ressources selon la revendication 4, dans lequel la détermination, à des intervalles d'une durée prédéterminée, des quantités respectives demandées par les N threads pour le premier type de ressources matérielles en fonction des conditions d'exécution des N threads comprend :
le comptage, à des intervalles de la durée prédéterminée, des nombres respectifs des N threads déclenchant un événement de blocage ; et
la détermination des quantités respectives demandées par les N threads pour le premier type de ressources matérielles en fonction de ces nombres.

6. Procédé d'allocation de ressources selon la revendication 4 ou 5, dans lequel la réallocation des ressources allouées dynamiquement du premier type de ressources matérielles entre les N threads en fonction des quantités respectives demandées par la pluralité de threads pour le premier type de ressources matérielles comprend :
la détermination d'une quantité totale demandée par les N threads pour le premier type de ressources matérielles en fonction des quantités respectives demandées par les N threads pour le premier type de ressources matérielles ; et
déterminer, à partir des ressources allouées de manière dynamique du premier type de ressources matérielles, une quantité de ressources allouées à chaque thread en fonction de la quantité totale demandée et des quantités respectives demandées par les N threads pour le premier type de ressources matérielles.

7. Appareil d'allocation de ressources, dans lequel l'appareil est configuré dans un processeur doté de la technologie SMT (Simultaneous Multi-Threading), le processeur est configuré avec N threads, N étant un entier supérieur à 1, et dans lequel l'appareil comprend :
une unité d'obtention (610) configurée pour obtenir des informations de configuration correspondant à chacun d'une pluralité de types de ressources matérielles ;
une unité de détermination (620) configurée pour déterminer une proportion de ressources allouées de manière statique et une proportion de ressources allouées de manière dynamique dans chaque type de ressources matérielles, en fonction des informations de configuration correspondant à chaque ressource matérielle ;
une première unité d'allocation (630) configurée pour allouer les ressources allouées de manière statique de chaque type de ressources matérielles aux N threads selon un rapport d'allocation prédéterminé ; et
une deuxième unité d'allocation (640) configurée pour allouer les ressources allouées dynamiquement de chaque type de ressources matérielles à au moins une partie des N threads en fonction des conditions d'exécution des N threads.

8. Dispositif d'allocation de ressources selon la revendication 7, dans lequel la proportion des ressources allouées de manière statique et la proportion des ressources allouées de manière dynamique sont des valeurs supérieures ou égales à 0 et inférieures ou égales à 1, et la somme de la proportion des ressources allouées de manière statique et de la proportion des ressources allouées de manière dynamique est égale à 1.

9. Dispositif d'allocation de ressources selon la revendication 7 ou 8, dans lequel la deuxième unité d'allocation est en outre configurée pour :
réallouer, à des intervalles d'une durée prédéterminée, les ressources allouées dynamiquement de chaque type de ressources matérielles entre les N threads en fonction des conditions d'exécution des N threads au cours de la durée prédéterminée.

10. Dispositif d'allocation de ressources selon la revendication 9, dans lequel la pluralité de types de ressources matérielles comprend un premier type de ressources matérielles ; et
la deuxième unité d'allocation est en outre configurée pour :
déterminer, à des intervalles de la durée prédéterminée, les quantités respectives demandées par les N threads pour le premier type de ressources matérielles en fonction des conditions d'exécution des N threads au cours de la durée prédéterminée ; et
réallouer les ressources allouées de manière dynamique du premier type de ressources matérielles entre les N threads en fonction des quantités respectives demandées par les N threads pour le premier type de ressources matérielles.

11. Dispositif d'allocation de ressources selon la revendication 10, dans lequel la deuxième unité d'allocation est en outre configurée pour :
compter, à des intervalles d'une durée prédéterminée, les nombres respectifs des N threads déclenchant un événement de blocage ; et
déterminer les quantités respectives demandées par les N threads pour le premier type de ressources matérielles en fonction des nombres.

12. Dispositif d'allocation de ressources selon la revendication 10 ou 11, dans lequel la deuxième unité d'allocation est en outre configurée pour :
déterminer une quantité totale demandée par les N threads pour le premier type de ressources matérielles en fonction des quantités respectives demandées par les N threads pour le premier type de ressources matérielles ; et
déterminer, à partir des ressources allouées de manière dynamique du premier type de ressources matérielles, une quantité de ressources allouées à chaque thread en fonction de la quantité totale demandée et des quantités respectives demandées par les N threads pour le premier type de ressources matérielles.

13. Un produit logiciel stocké sur :
une mémoire stockant un ou plusieurs modules de programme informatique ;
dans lequel le ou les modules de programme informatique, lorsqu'ils sont exécutés par un processeur doté de la technologie SMT (Simultaneous Multi-Threading), mettent en œuvre le procédé d'allocation de ressources selon l'une quelconque des revendications 1 à 6.

14. Support de stockage lisible par ordinateur, stockant des instructions non transitoires lisibles par ordinateur qui, lorsqu'elles sont exécutées par un ordinateur, mettent en œuvre le procédé d'allocation de ressources selon l'une quelconque des revendications 1 à 6.
